# EUROPÄISCHE PATENTSCHRIFT

(11) **EP 0 970 152 B1**
(45) Veröffentlichungstag und Bekanntmachung des Hinweises auf die Patenterteilung: **28.08.2002**
(21) Anmeldenummer: 98920471.4
(22) Anmeldetag: 04.03.1998
(51) Int. Cl.: C09D 5/44, C08G 59/14, C08G 59/18

(54) **WÄSSRIGE BINDEMITTELDISPERSION, VERFAHREN ZU IHRER HERSTELLUNG SOWIE KATHODISCH ABSCHEIDBARE ELEKTROTAUCHLACKE**
AQUEOUS DISPERSION OF BINDING AGENTS, METHOD FOR THE PRODUCTION THEREOF AND CATHODIC ELECTRODEPOSITION PAINTS
DISPERSION AQUEUSE DE LIANTS, LEUR PROCEDE DE PRODUCTION AINSI QUE PEINTURES ELECTROPHORETIQUES POUVANT ETRE DEPOSEES PAR VOIE CATHODIQUE

(30) Priorität: 19.03.1997 DE 19711398
(43) Veröffentlichungstag der Anmeldung: 12.01.2000
(73) Patentinhaber: E.I. DU PONT DE NEMOURS AND COMPANY, Wilmington Delaware 19898 (US)
(72) Erfinder: KLEIN, Klausjörg, D-42289 Wuppertal (DE); HÖNIG, Helmut, A-8010 Graz (AT)
(74) Vertreter: Hrabal, Ulrich, Dr.
(86) Internationale Anmeldenummer: EP9801221
(87) Internationale Veröffentlichungsnummer: WO98041586

(56) Entgegenhaltungen:
- EP-A- 0 193 102

## Beschreibung

Die Erfindung betrifft molekülvergrößerte Aminoepoxidharze, ein Verfahren zu ihrer Herstellung und kathodisch abscheidbare Elektrotauchlacke (KTL), die ein oder mehrere nach dem erfindungsgemäßen Verfahren hergestellte Aminoepoxidharze als zusätzliche Bindemittel enthalten.

Die EP-A-0 612 818 beschreibt kathodisch abscheidbare Elektrotauchlacke, die neben einem sauer neutralisierten KTL-Bindemittel vernetzte Polymermikroteilchen enthalten, welche hergestellt worden sind durch Vermischen eines tert.-Aminfunktionellen Acrylpolymeren und eines Polyepoxids, Dispergieren der Mischung in einem wäßrigen Medium und Erhitzen der Dispersion zwecks Vernetzung.

Bei der kathodischen Elektrotauchlackierung handelt es sich um einen technischen Prozeß, der anfällig ist gegenüber Verunreinigungen, die sich während des Einbrennens der kathodisch abgeschiedenen Lackschichten als Oberflächenstörungen, beispielsweise als Krater negativ bemerkbar machen. Die Verunreinigungen können dabei aus dem Lackbad oder aus der Umgebungsluft herrühren. Da es praktisch unmöglich ist, die für die negativen Oberflächenerscheinungen verantwortlichen, oft schon in Spuren schädlichen Verunreinigungen aus dem KTL-Prozeß zu eliminieren, hat man sich in der Vergangenheit durch Zusatz von Additiven zu den KTL-Bädern geholfen. Die Additive helfen zwar gegen die unerwünschten Oberflächenstörungen, führen aber oftmals, insbesondere bei höherer Dosierung zu Störungen der Haftung von nachfolgend aufgebrachten Lackschichten.

Aufgabe der Erfindung ist die Bereitstellung von in kathodisch abscheidbaren Elektrotauchlacken einsetzbaren Bindemitteln, die bei der Verwendung als zusätzliche Bindemittel zu einer reduzierten Empfindlichkeit kataphoretisch abgeschiedener Überzugsschichten gegenüber Oberflächenstörungen führen, insbesondere wenn die Überzugsschichten aus niedrig pigmentierten, gegenüber Oberflächenstörungen besonders anfälligen kathodisch abscheidbaren Elektrotauchlacken gebildet werden. Die als zusätzliche Bindemittel in kathodisch abscheidbaren Elektrotauchlacken einsetzbaren Bindemittel sollen keine Haftungsstörungen zu Nachfolgelackschichten verursachen.

Die Aufgabe wird gelöst durch Bereitstellung wäßrig dispergierter Bindemittel A), die hergestellt werden, indem man tertiäre Aminogruppen eines Aminoepoxidharzes a1) mit Säure neutralisiert, das erhaltene Produkt mit Polyepoxid a2) unter Bildung quartärer Ammoniumgruppen umsetzt und mit Wasser in eine wäßrige Dispersion überführt.

Die Erfindung betrifft auch ein Verfahren zur Herstellung wäßrig dispergierter Bindemittel A), bei dem man tertiäre Aminogruppen eines Aminoepoxidharzes a1) mit Säure neutralisiert, das erhaltene Produkt mit Polyepoxid a2) unter Bildung quartärer Ammoniumgruppen umsetzt und mit Wasser in eine wäßrige Dispersion überführt.

Aminoepoxidharze a1) mit tertiären Amingruppen sind als KTL-Bindemittel bekannt. Bevorzugt können sie beispielsweise durch Umsetzung von aromatischen Epoxidharzen mit primären und/oder sekundären Mono- und/oder Polyaminen in organischer Lösung oder in der Schmelze hergestellt werden. Wird in organischer Lösung gearbeitet, so können als Lösemittel oder Lösemittelgemische wassermischbare Lösemittel, beispielsweise Alkohole wie Isopropanol, Isobutanol, n-Butanol; Glykolether wie Methoxypropanol, Butoxyethanol; Glykoletherester wie Butylglykolacetat oder mit Wasser nicht mischbare Lösemittel wie Xylol verwendet werden. Bei aromatischen Epoxidharzen handelt es sich um epoxidgruppenhaltige aromatische Polyglycidylether, wobei der Begriff "aromatische Epoxidharze" im Rahmen der vorliegenden Erfindung auch solche Epoxidharzderivate umfassen soll, bei denen ein Teil der oder sämtliche Epoxidgruppen der epoxidgruppenhaltigen aromatischen Polyglycidylether durch Umsetzung mit Kohlendioxid in 5-gliedrige cyclische Carbonatgruppen überführt worden sind. Die aromatischen Polyglycidylether gehen primär aus der Reaktion von Polyphenolen, bevorzugt Diphenolen und insbesondere mehrkernigen Diphenolen mit Epichlorhydrin hervor. Die an sich aromatischen Polyglycidylether können auch aliphatische Anteile enthalten. Bevorzugt basieren sie jedoch ausschließlich auf Diphenolen. Zur Synthese von Aminoepoxidharzen a1) werden als aromatische Epoxidharze bevorzugt solche eingesetzt, die oder deren Mischung ein Epoxidund/oder Cyclocarbonat-Äquivalentgewicht zwischen 170 und 1000 aufweisen. Besonders bevorzugte aromatische Epoxidharze sind dabei die üblichen käuflichen Epoxidharze, die primär aus der Reaktion von Diphenylolpropan (Bisphenol A) mit Epichlorhydrin hervorgehen. Die Mono- und/oder Polyamine können neben den primären und/oder sekundären Aminogruppen auch weitere funktionelle Gruppen enthalten, insbesondere Hydroxylgruppen und/oder tertiäre Aminogruppen. Beispiele für Mono- und/oder Polyamine mit primären und/oder sekundären Aminogruppen sowie gegebenenfalls weiteren funktionellen Gruppen sind Methylamin, Ethylamin, Propylamin, Butylamin, Octylamin, 2-Ethylhexylamin, Dimethylamin, Diethylamin, Dipropylamin, Dibutylamin, Methylbutylamin, Morpholin, Diethylaminoethylamin, Dimethylaminopropylamin, Laurylpropylendiamin, Diethylentriamin, N,N'-Bis-(isohexyl)-1,6-diaminohexan, Ethanolamin, Propanolamin, Ethylenglykol(2-aminoethyl)ether, N-Methylaminoethanol oder Diethanolamin, 1:2-Addukte aus diprimärem Amin wie 1,6-Diaminohexan oder 2-Methylpentamethylendiamin und Monoepoxid wie Glycidylether- oder -ester oder Monoepoxyalkane.

Die Herstellung der Aminoepoxidharze a1) erfolgt so, daß kein freies Amin verbleibt, bevorzugt unter vollständigem Verbrauch der Epoxid- und/oder cyclischen Carbonatgruppen des aromatischen Epoxidharz(derivat)es. Besonders bevorzugt werden die primären bzw. sekundären Aminogruppen der Mono- und/oder Polyamine dabei vollständig zu tertiären Aminogruppen umgesetzt.

Die Aminoepoxidharze a1) mit tertiären Aminogruppen weisen einen Gehalt an Aminogruppen von 35 bis 360 Milliäquivalenten pro 100g Festharz auf. Der Gehalt an tertiären Aminogruppen, die als Substituenten und/oder als Bestandteil des Polymerrückgrats im Aminoepoxidharz a1) vorliegen können, beträgt 35 bis 300, bevorzugt 50 bis 250 Milliäquivalente pro 100g Festharz. Besonders bevorzugt enthalten die Aminoepoxidharze a1) neben den tertiären Aminogruppen keine weiteren Aminogruppen, wie beispielsweise primäre und/oder sekundäre Aminogruppen. Die Aminoepoxidharze a1) enthalten Hydroxylgruppen als Resultat der ringöffnenden Addition von primären und/oder sekundären Aminogruppen an die Epoxidgruppen und/oder cyclischen Carbonatgruppen der Epoxidharz(derivat)e und bevorzugt zusätzlich herrührend aus hydroxyfunktionellen Aufbaukomponenten des Aminoepoxidharzes a1), wie beispielsweise entsprechende Alkanolamine. Die Aminoepoxidharze a1) besitzen Hydroxylzahlen beispielsweise zwischen 40 und 300, bevorzugt zwischen 50 und 250, besonders bevorzugt zwischen 50 und 220 mg KOH/g Festharz. Die Aminoepoxidharze a1) können für kathodisch abscheidbare Aminoepoxidharzbindemittel übliche chemische Modifizierungen aufweisen. Beispielsweise können die Aminoepoxidharze a1) Urethangruppen, Polyethergruppen oder Polyamidgruppen enthalten. Die zahlenmittleren Molekulargewichte (Mn) der Aminoepoxidharze a1) betragen beispielsweise zwischen 1000 und 10000.

Die tertiären Aminogruppen der als Schmelze oder als organische Lösung vorliegenden Aminoepoxidharze a1) werden zumindest teilweise mit Säure, bevorzugt mit Carbonsäuren neutralisiert. Dies kann bei erhöhten Temperaturen von beispielsweise 30 bis 140, bevorzugt von 30 bis 90°C geschehen. Beispiele für geeignete Carbonsäuren sind Ameisensäure, Essigsäure und Milchsäure. Die Säure kann in mit Wasser verdünnter Form eingesetzt werden, wobei jedoch zu beachten ist, daß die auf diese Weise zugegebene Wassermenge das Aminoepoxidharz a1) nicht in eine wäßrige Dispersion überführt, d.h. eine auf diese Weise zum Aminoepoxidharz a1) zugegebene Wassermenge muß ausreichend gering bemessen sein. Die Neutralisation kann so erfolgen, daß nur die für die Durchführung der Quaternisierungsreaktion notwendige und nach Abschluß der Quaternisierung nicht mehr durch Säure-Base-Titration erfaßbare Säuremenge zugegeben wird, so daß ein gegebenenfalls noch fehlender Anteil an Säure, beispielsweise eine zur Erreichung einer ausreichenden Wasserverdünnbarkeit des Quaternisierungsprodukts A) noch fehlende Säuremenge, vor der anschließenden Überführung von A) in die wäßrige Phase zugegeben werden kann. Es ist jedoch auch möglich und aus Gründen einer vereinfachten Durchführung auch bevorzugt, die insgesamt notwendige Säuremenge komplett vor der anschließend durchzuführenden Quaternisierungsreaktion zuzugeben. Die im Zuge der Quaternisierungsreaktion gegebenenfalls nicht verbrauchte Säure kann durch Säure-Base-Titration erfaßt werden. In jedem Falle wird eine Überneutralisation des Aminoepoxidharzes a1) bzw. des Quaternisierungsprodukts A) vermieden.

Die einzeln oder im Gemisch einsetzbaren Polyepoxide a2) besitzen im Durchschnitt mehr als eine, bevorzugt zwischen 1,5 und 3 Epoxidgruppen pro Molekül. Besonders bevorzugt handelt es sich um Diepoxide. Bei den Polyepoxiden a2) kann es sich um niedermolekulare, definierte Verbindungen handeln oder es handelt sich um oligomere oder polymere Verbindungen. Bevorzugt liegen die Epoxidäquivalentgewichte der Polyepoxide a2) von 87 bis 500. Beispiele für Polyepoxide a2) sind Polyglycidylether von mehrfunktionellen Alkoholen oder mehrfunktionellen Phenolen, insbesondere Diolen und/oder Diphenolen wie z.B. hydrierte Bisphenol-A-Glycidylether, Hexandioldiglycidylether, Glycerintriglycidylether, Diglycidylhexahydrophthalat, Diglycidylester von Dimersäuren, epoxidierte Derivate des (Methyl)cyclohexens, wie z.B. 3,4-Epoxycyclohexyl-methyl-(3,4-epoxycyclohexan)carboxylat, epoxidfunktionelle Poly(meth)acrylatharze, Polyalkylenglykoldiglycidylether oder epoxidiertes Polybutadien. Bevorzugte Polyepoxide a2) sind aromatische Epoxidharze, wie sie primär aus der Reaktion von Polyphenolen, bevorzugt Diphenolen und insbesondere mehrkernigen Diphenolen mit Epichlorhydrin hervorgehen. Besonders bevorzugte aromatische Epoxidharze sind dabei die üblichen käuflichen Epoxidharze, die primär aus der Reaktion von Diphenylolpropan (Bisphenol A) mit Epichlorhydrin hervorgehen.

Die mit Säure neutralisierten tertiären Aminogruppen der Aminoepoxidharze a1) werden durch Umsetzung mit Polyepoxid a2) quaternisiert, beispielsweise bei erhöhten Temperaturen, in der Regel zwischen 30 und 90°C. Bei der Quaternisierung kommt es unter vollständigem Verbrauch der Epoxidgruppen des Polyepoxids a2) zu einer Molekülvergrößerung. Abhängig von der Wahl des Aminoepoxidharzes a1) und des Polyepoxids a2) sowie des Mengenverhältnisses von a1) zu a2) erfolgt die molekülvergrößernde Quaternisierung im Sinne einer Kettenverlängerung, einer Molekülverzweigung oder weniger bevorzugt unter Bildung eines intern vernetzten Quaternisierungsproduktes A).

Das Aminoepoxidharz a1) und das Polyepoxid a2) werden bei der Herstellung des Quaternisierungsprodukts A) nach ihrer Art und Menge so ausgewählt, daß das Quaternisierungsprodukt A) einen Gehalt an quartären Ammoniumgruppen von 15 bis 80, bevorzugt von 20 bis 60 Milliäquivalente pro 100 g Festharz und ein zahlenmittleres Molekulargewicht (Mn) von 2000 bis unendlich (im Falle des weniger bevorzugten, intern vernetzten Quaternisierungsprodukts A)), bevorzugt von 2000 bis 50000 aufweist. Das als zusätzliches KTL-Bindemittel einsetzbare Quaternisierungsprodukt A) weist neben den quartären Ammoniumgruppen dem Aminoepoxidharz a1) entstammmende sowie im Zuge der Quaternisierungsreaktion gebildete Hydroxylgruppen auf. Bevorzugt enthält das Quaternisierungsprodukt A) neben den vorstehend genannten Gruppen auch noch neutralisierte und/oder nicht neutralisierte Aminogruppen. Der Gehalt an titrierbarer Säure kann bis zu 60 Milliäquivalente pro 100g festem Quaternisierungsprodukt A) betragen, bevorzugt liegt der Gehalt an titrierbarer Säure bei 10 bis 40 Milliäquivalente pro 100g festem Quaternisierungsprodukt A).

Das Quaternisierungsprodukt A) wird erfindungsgemäß mit Wasser in eine wäßrige Dispersion überführt. Es ist erfindungswesentlich, daß die zur Überführung des Quaternisierungsprodukts A) in die wäßrige Phase dienende Wassermenge nach dem homogenen Vermischen des Polyepoxids a2) mit dem neutralisierten Aminoepoxidharz a1), beispielsweise nach der Quaternisierungsreaktion, zugegeben wird. Dabei kann die zur Dispersionsbildung gerade ausreichende Wassermenge verwendet werden oder es wird eine größere Wassermenge zugegeben, um einen bestimmten, gewünschten Dispersionsfestkörper einzustellen. Die Zugabe des Wassers kann zum Quaternisierungsprodukt A) oder umgekehrt erfolgen. Zur Unterstützung der Dispersionsbildung können erhöhte Temperaturen von beispielsweise 30 bis 90°C angewendet werden. Gegebenenfalls in der wäßrigen Dispersion des Quaternisierungsprodukts A) enthaltenes organisches Lösemittel, insbesondere mit Wasser nicht mischbares Lösemittel, kann bis zum gewünschten Gehalt aus der wäßrigen Dispersion entfernt werden, beispielsweise durch Destillation im Vakuum. Ein Abdestillieren von Lösemittel kann auch schon vor der Dispersionsbildung erfolgen.

Die erfindungsgemäß hergestellten wäßrigen Dispersionen der Komponente A) weisen im allgemeinen einen Festkörpergehalt von 30 bis 50 Gew.-% auf.

Ein weiterer Gegenstand der Erfindung sind kathodisch abscheidbare Elektrotauchlacke, deren Bindemittelfestkörper (ohne gegebenenfalls enthaltene Vernetzer) aus 1 bis 50, bevorzugt 2 bis 30 Gew.-% eines oder mehrerer der erfindungsgemäßen Quaternisierungsprodukte A) und der zu 100 Gew.-% fehlende Gewichtsanteil aus einem oder mehreren selbst- oder fremdvernetzenden kathodisch abscheidbaren Bindemitteln (KTL-Bindemitteln) B) besteht. Im Falle fremdvernetzender KTL-Bindemittelsysteme enthalten die erfindungsgemäßen kathodisch abscheidbaren Elektrotauchlacke Vernetzer C) in einem Harzfestkörper-Verhältnis von 10 bis 40 Teile Vernetzer C) : 100 Teile Bindemittel als Summe der Komponenten A) und B).

Das Quaternisierungsprodukt A) kann erfindungsgemäß als zusätzliches Bindemittel in kathodisch abscheidbaren Elektrotauchlacken (KTL-Bädern, KTL-Überzugsmitteln) verwendet werden. Der Mengenanteil beträgt 1 bis 50, bevorzugt 2 bis 30 Gew.-%, bezogen auf den Bindemittelfestkörper (ohne gegebenenfalls enthaltene Vernetzer C)) des kathodisch abscheidbaren Elektrotauchlacks. Das Quaternisierungsprodukt A) kann als erfindungsgemäß hergestellte wäßrige Dispersion einem an sich fertigen KTL-Bad zugesetzt werden. Es ist auch möglich die wäßrige Dispersion von A) bei der Herstellung des KTL-Überzugsmittels an geeigneter Stelle zuzusetzen, beispielsweise durch Vermischen mit einer wäßrigen, gegebenenfalls Vernetzer C) enthaltenden Dispersion eines KTL-Bindemittels B) oder mit einer zur Herstellung von KTL-Überzugsmitteln geeigneten Pigmentpaste.

KTL-Bindemittel B) und gegebenenfalls Vernetzer C) enthaltende KTL-Dispersionen, die zur Herstellung von KTL-Bädern eingesetzt werden können, sind bekannt. Bei den KTL-Bindemitteln B) handelt es sich um Bindemittel, die kationische oder in kationische Gruppen überführbare basische Gruppen, z.B. Amino-, Ammonium-, z.B. quartäre Ammonium-, Phosphonium- und/oder Sulfonium-Gruppen tragen. Bevorzugt sind KTL-Bindemittel B) mit basischen Gruppen, besonders bevorzugt mit stickstoffhaltigen basischen Gruppen, wie Aminogruppen. Diese Gruppen können quaternisiert vorliegen oder sie werden mit einem üblichen Neutralisationsmittel, z.B. einer organischen Monocarbonsäure, wie z.B. Milchsäure, Ameisensäure, Essigsäure, wie dem Fachmann geläufig, in kationische Gruppen überführt. Solche basischen Harze sind beispielsweise primäre, sekundäre und/oder tertiäre Aminogruppen enthaltende Harze. Die Aminzahlen solcher Harze liegen z.B. bei 20 bis 250 mg KOH/g. Das Gewichtsmittel der Molmasse (Mw) der Harze liegt bevorzugt bei 300 bis 10000. Beispiele für KTL-Bindemittel B) sind Amino(meth)acrylatharze, Aminopolyurethanharze, aminogruppenhaltige Polybutadienharze. Im Rahmen der Erfindung bevorzugte KTL-Bindemittel B) sind Aminoepoxidharze, insbesondere Aminoepoxidharze vom Typ a1), wie sie bei der Herstellung der Quaternisierungsprodukte A) eingesetzt werden. Die KTL-Bindemittel B) können selbstvernetzend sein oder sie werden mit bekannten Vernetzern C) im Gemisch eingesetzt. Beispiele für solche Vernetzer C) sind Aminoplastharze, Vernetzer mit endständigen Doppelbindungen, Polyepoxidverbindungen, Vernetzer, die umesterungsfähige und/oder umamidierungsfähige Gruppen enthalten, und insbesondere blockierte Polyisocyanate.

KTL-Dispersionen können hergestellt werden durch Synthese von KTL-Bindemitteln B) in Anwesenheit oder Abwesenheit organischer Lösemittel und Überführung in eine wäßrige Dispersion durch Verdünnen der zuvor mit Säure neutralisierten KTL-Bindemittel B) mit Wasser. Das oder die KTL-Bindemittel B) können im Gemisch mit einem oder mehreren geeigneten Vernetzern C) vorliegen und gemeinsam mit diesen in die wäßrige Dispersion überführt werden. Organisches Lösemittel kann, sofern vorhanden, vor oder, nach Überführung in die wäßrige Dispersion bis zum, gewünschten Gehalt entfernt werden, beispielsweise durch Destillation im Vakuum.

Die nachträgliche Entfernung von Lösemitteln kann beispielsweise vermieden werden, wenn die gegebenenfalls im Gemisch mit Vernetzern C) vorliegenden KTL-Bindemittel B) im lösemittelarmen oder -freien Zustand, z.B. als lösemittelfreie Schmelze bei Temperaturen von beispielsweise bis zu 140°C mit Säure neutralisiert und anschließend mit Wasser in die KTL-Dispersion überführt werden. Ebenfalls ist es möglich, die Entfernung organischer Lösemittel zu vermeiden, wenn die KTL-Bindemittel B) als Lösung in einem radikalisch polymerisierbaren, olefinisch ungesättigten Monomeren vorgelegt werden oder die Bindemittelsynthese in einem radikalisch polymerisierbaren Monomeren (z.B. Styrol) als Lösemittel durchgeführt wird, danach durch Neutralisation mit Säure und Verdünnen mit Wasser in eine wäßrige Dispersion überführt wird und anschließend das radikalisch polymerisierbare Monomere auspolymerisiert wird.

Bei den erfindungsgemäßen KTL-Überzugsmitteln handelt es sich um wäßrige Überzugsmittel mit einem Festkörper von 10 bis 30 Gew.-%, beispielsweise 10 bis 20 Gew.-%. Dieser setzt sich zusammen aus dem Harzfestkörper, bestehend aus den Bindemitteln A) und B) und gegebenenfalls vorhandenen Vernetzern C) sowie aus gegebenenfalls im KTL-Überzugsmittel enthaltenen Füllstoffen, Pigmenten und nichtflüchtigen, lacküblichen Additiven. Handelt es sich bei den erfindungsgemäßen KTL-Überzugsmitteln um pigmentierte Systeme, so weisen sie ein Pigment/Harzfestkörper-Gewichtsverhältnis von beispielsweise 0,01 : bis 0,7 : 1 auf, wobei Füllstoffe mit zu Pigmenten gerechnet werden. Im Rahmen der Erfindung sind solche KTL-Überzugsmittel bevorzugt, deren Bindemittelfestkörper A) und B) sich aus einem oder mehreren erfindungsgemäßen Quaternisierungsprodukten A) und einem oder mehreren Aminoepoxidharzen B) zusammensetzt. Besonders bevorzugte Bindemittelfestkörper sind solche, die sich aus nur einem Aminoepoxidharz B) vom Typ a1) und einem auf dem gleichen Aminoepoxidharz a1) basierenden Quaternisierungsprodukt A) zusammensetzen. Dies hat den Vorteil, daß nur ein Aminoepoxidharz a1) hergestellt werden muß, wovon eine Teilmenge als Bindemittel B) im erfindungsgemäßen KTL-Überzugsmittel dient, während die verbleibende Teilmenge zu einem erfindungsgemäßen Quaternisierungsprodukt A) weiterverarbeitet wird, das ebenfalls Bestandteil im gleichen KTL-Überzugsmittel ist.

Erfindungsgemäße KTL-Überzugsmittel mit einem derartig zusammengesetzten Bindemittelfestkörper weisen eine herausragende Badstabilität auf als vorteilhafte Folge der besonders guten Verträglichkeit der Bindemittel A) und B) untereinander.

Handelt es sich bei den erfindungsgemäßen KTL-Überzugsmitteln um pigmentierte KTL-Überzugsmittel, so können diese durch Anreiben der Pigmente in der Komponente A) und/oder B) und Komplettierung durch Vermischen mit dem noch fehlenden Anteil an Komponente A) und/oder B) hergestellt werden. Bevorzugt werden erfindungsgemäße, pigmentierte KTL-Überzugsmittel durch Vermischen einer gegebenenfalls Vernetzer (C) enthaltenden KTL-Bindemitteldispersion B), einer erfindungsgemäß hergestellten Dispersion eines Quaternisierungsprodukts A) und einer separaten Pigmentpaste hergestellt, wobei zunächst die Komponenten A) und B) miteinander vermischt und dann die Pigmentpaste mit der A) plus B)-Bindemittelmischung vermischt werden kann oder die Pigmentpaste wird zunächst mit B) vermischt, bevor ein Vermischen mit A) erfolgt oder umgekehrt.

Beispiele für Pigmente sind die üblichen anorganischen und/oder organischen Buntpigmente und/oder Effektpigmente, wie z.B. Titandioxid, Eisenoxidpigmente, Ruß, Phthalocyaninpigmente, Chinacridonpigmente, Metallpigmente, z.B. aus Titan, Aluminium oder Kupfer, Interferenzpigmente, wie z.B. titandioxidbeschichtetes Aluminium, beschichteter Glimmer, Graphiteffektpigmente, plättchenförmiges Eisenoxid, plättchenförmige Kupferphthalocyaninpigmente. Beispiele für Füllstoffe sind Kaolin, Talkum oder Siliciumdioxid. Es ist auch möglich, übliche Korrosionsschutzpigmente zu verwenden. Beispiele dafür sind Zinkphosphat, Bleisilikat oder organische Korrosionsinhibitoren. Die Art und Menge der Pigmente richtet sich nach dem Verwendungszweck der Überzugsmittel. Sollen klare Überzüge erhalten werden, so werden keine oder nur transparente Pigmente, wie z.B. mikronisiertes Titandioxid oder Siliciumdioxid eingesetzt. Sollen deckende Überzüge appliziert werden, so sind bevorzugt farbgebende Pigmente im KTL-Bad enthalten.

Die Pigmente können wie schon erwähnt in der Komponente A) und/oder B) angerieben werden oder sie werden bevorzugt zu separaten Pigmentpasten dispergiert, z.B. unter Verwendung von bekannten Pastenharzen. Solche Harze sind dem Fachmann geläufig. Beispiele für in KTL-Bädern verwendbare Pastenharze sind in der EP-A-0 183 025 und in der EP-A-0 469 497 beschrieben.

Als Additive sind die üblichen Additive möglich, wie sie insbesondere für KTL-Überzugsmittel bekannt sind. Beispiele dafür sind Netzmittel, Neutralisationsmittel, Verlaufsmittel, Katalysatoren, Korrosionsinhibitoren, Antischaummittel, Lösemittel.

Die erfindungsgemäßen KTL-Überzugsmittel können durch kathodische Elektroabscheidung im Rahmen einer Einschicht- oder Mehrschichtlackierung auf verschiedene elektrisch leitfähige oder elektrisch leitfähig gemachte Substrate, insbesondere metallische Substrate aufgebracht und eingebrannt werden. Die erfindungsgemäßen KTL-Überzugsmittel eignen sich insbesondere auf dem Kraftfahrzeugsektor, beispielsweise zur Grundierung von Kraftfahrzeugkarosserien oder Kraftfahrzeugkarosserieteilen.

Bei Verwendung der erfindungsgemäßen Quaternisierungsprodukte A) als zusätzliches Bindemittel in KTL-Überzugsmitteln weisen aus diesen durch kataphoretische Abscheidung erzeugte Überzugsschichten eine reduzierte Empfindlichkeit gegenüber Oberflächenstörungen auf, auch wenn es sich bei den KTL-Überzugsmitteln um Klarlacke oder um Überzugsmittel mit einer nur geringen Pigmentierunghöhe handelt, beispielsweise um KTL-Überzugsmittel mit Pigment/Harzfestkörper-Verhältnissen von unter 0,2 : 1. Die Empfindlichkeit gegenüber Oberflächenstörungen ist besonders gering, wenn KTL-Überzugsmittel verwendet werden, deren Bindemittelfestkörper bestehend aus A) und B) sich aus einem oder mehreren erfindungsgemäßen Quaternisierungsprodukten A) und einem oder mehreren Aminoepoxidharzen B) oder besonders bevorzugt aus nur einem Aminoepoxidharz B) vom Typ a1) und einem auf dem gleichen Aminoepoxidharz a1) basierenden Quaternisierungsprodukt A) zusammensetzt.

Die Verwendung der erfindungsgemäßen Quaternisierungsprodukte A) als zusätzliche Bindemittel in KTL-Überzugsmitteln verursacht keine Störungen in der Haftung zu auf die KTL-Schichten nachfolgend aufgebrachten Lackschichten.

### Beispiele

### Beispiel 1 (Herstellung von Wismutlactat)

901 Teile einer 70 gew.-%igen Lösung von Milchsäure in Wasser werden auf 70°C erwärmt. Unter Rühren werden 466 Teile handelsübliches Wismutoxid (Bi₂O₃) portionsweise zugegeben. Nach weiteren 6 Stunden Rühren bei 70°C wird der Ansatz auf 20°C gekühlt und 12 Stunden ohne Rühren belassen. Schließlich wird der Niederschlag abfiltriert, mit wenig Wasser und Ethanol gewaschen und bei 50°C getrocknet.

### Beispiel 2 (Herstellung einer KTL-Dispersion)

a) 832 Teile des Monocarbonats eines Epoxidharzes auf der Basis von Bisphenol A (Handelsprodukt Epikote 828) werden mit 830 Teilen eines handelsüblichen Polycaprolactonpolyols (Handelsprodukt CAPA 205) und 712 Teilen Diglykoldimethylether gemischt und bei 70 bis 140°C mit 0,3 % BF₃-Etherat zur Reaktion gebracht bis eine Epoxidzahl von 0 erreicht wird. Zu diesem Produkt (Festkörper 70 %, 2 Äquivalente Carbonat) werden bei 40 bis 80°C in Gegenwart von 0,3% Zn-Acetylacetonat als Katalysator 307 Teile eines Umsetzungsproduktes aus 174 Teilen Toluylendiisocyanat (2 Äquivalente NCO) mit 137 Teilen 2-Ethylhexanol mit einem NCO-Gehalt von 12,8 % zugegeben. Es wird bis zu einem NCO-Wert von 0 umgesetzt und dann mit Diglykoldimethylether auf 70 % Festkörper eingestellt.
b) Zu 1759 Teilen eines Biscarbonats eines Epoxidharzes auf der Basis von Bisphenol A (Handelsprodukt Epicote 1001) werden bei 60 bis 80°C 618 Teile eines Umsetzungsproduktes aus 348 Teilen Toluylendiisocyanat (80 % 2,4-Isomeres; 20 % 2,6-Isomeres) mit 274 Teilen 2-Ethylhexanol mit einem Rest-NCO-Gehalt von 12,8 % langsam zugegeben. Die Reaktion wird bis zu einem NCO-Wert von 0 fortgesetzt. Das Produkt hat einen Feststoffgehalt von 70 %.
c) Zu 860 Teilen Bishexamethylentriamin gelöst in 2315 Teilen Methoxypropanol werden bei einer Temperatur von 30°C 622 Teile des Umsetzungsproduktes aus 137 Teilen 2-Ethylhexanol mit 174 Teilen Toluylendiisocyanat zugegeben (NCO-Gehalt 12,8 %) und bis zu einem NCO-Gehalt von 0 umgesetzt. Dann werden 4737 Teile des Umsetzungsproduktes b) und 3246 Teile des Reaktionsproduktes a) (jeweils 70 % in Diglykoldimethylether) zugegeben und bei 60 bis 90°C zur Reaktion gebracht. Bei einer Aminzahl von 32 mg KOH/g wird die Reaktion beendet. Das entstehende Produkt wird im Vakuum auf einen Festkörper von 85 % abdestilliert.
d) Es wird mit 30 mmol Ameisensäure/100 g Harz neutralisiert. Danach wird auf 70°C erhitzt und Wismutlactat unter Rühren portionsweise in einer solchen Menge zugegeben, daß 1 Gew.-% Wismut, bezogen auf Feststoffgehalt im Ansatz vorhanden sind. Anschließend wird noch 6 Stunden bei 60°C gerührt. Nach Abkühlen wird mit deionisiertem Wasser in eine Dispersion mit einem Festkörper von 40 Gew.-% überführt.

### Beispiel 3 (Herstellung einer KTL-Dispersion mit einem Aminoepoxidharz-Bindemittel vom Typ a1))

500 Teile einer Lösung eines Aminoepoxidharzes mit einem Gehalt an tertiären Aminogruppen von 160 Milliäquivalenten pro 100g Festharz, hergestellt gemäß EP-A-0 012 463, Beispiel I(b) werden mit 160 Teilen einer Vernetzerlösung gemäß EP-A-0 012 463, Beispiel II(b) vermischt und mit 28 Teilen Milchsäure neutralisiert. Danach wird auf 60°C erhitzt und Wismutlactat unter Rühren portionsweise in einer solchen Menge zugegeben, daß 1 Gew.-% Wismut, bezogen auf Feststoffgehalt im Ansatz vorhanden sind. Anschließend wird noch 6 Stunden bei 60°C gerührt. Nach Abkühlen wird mit deionisiertem Wasser in eine Dispersion mit einem Festkörper von 40 Gew.-% überführt.

### Beispiel 4 (Herstellung einer Pigmentpaste)

Zu 223 Teilen des Pastenharzes nach EP-A-0 469 497 A1 Beispiel 1 (55 %) werden unter einem schnellaufenden Rührwerk 15 Teile Essigsäure (50 %), 30 Teile eines handelsüblichen Netzmittels (50 %) und 350 Teile deionisiertes Wasser gegeben. Dazu werden 12,3 Teile Ruß und 430 Teile Titandioxid gegeben. Mit deionisiertem Wasser wird auf einen Festkörper von 53 Gew.-% eingestellt und auf einer Perlmühle vermahlen. Es entsteht eine stabile Pigmentpaste.

### Beispiel 5 (Herstellung eines erfindungsgemäßen Quaternisierungsprodukts A))

1000 Teile einer Lösung eines Aminoepoxidharzes (70 Gew.-% in Butoxyethanol) mit einem Gehalt an tertiären Aminogruppen von 160 Milliäquivalenten pro 100g Festharz, hergestellt gemäß EP-A-0 012 463, Beispiel I(b) werden mit 33 Teilen 50gew.-%iger Ameisensäure neutralisiert und auf 80°C erwärmt. Bei 80°C werden 100 Teile deionisiertes Wasser und danach 45 Teile eines Epoxidharzes auf der Basis von Bisphenol A (Handelsprodukt Epikote 828) zugegeben. Bei 80°C wird das Reaktionsgut homogen vermischt. Anschließend wird das Reaktionsgut durch portionsweise Zugabe von deionisiertem Wasser in eine wäßrige Dispersion mit einem Festkörper von 35 Gew.-% überführt. Dabei fällt die Temperatur auf 45°C ab. Nach dem Abkühlen erhält man eine stabile Dispersion, deren durch Titration ermittelter Gehalt an Säure 15 Milliäquivalente pro 100 g Festharz beträgt.

### Beispiele 6 a-h (Herstellung von KTL-Bädern und -Beschichtungen)

Durch Vermischen von KTL-Dispersionen (aus Beispiel 2 oder Beispiel 3) mit gegebenenfalls dem Quaternisierungsprodukt A) aus Beispiel 5 und deionisiertem Wasser und Zusatz der Pigmentpaste aus Beispiel 4 unter gutem Rühren werden in üblicher Weise KTL-Bäder mit einem Festkörper von 20 Gew.-% bei verschiedenen Pigment/Bindemittel-Gewichtsverhältnissen hergestellt. Die so hergestellten KTL-Bäder werden jeweils bezogen auf ihren Festkörpergehalt mit 0,25% ASTM-Öl Nr.1 (Handelsprodukt der Fuchs Mineralölwerke GmbH, Mannheim) als kraterverursachendes Mittel verunreinigt. Aus den KTL-Bädern werden übliche phosphatierte Karosseriestahlbleche in 20 µm Trockenschichtdicke kataphoretisch beschichtet und 30 Minuten bei 180°C eingebrannt. Nachfolgende Tabelle stellt die Zusammensetzung der KT-Lacke und die erhaltenen Prüfergebnisse zusammen.

| KTL-Bad | Harfestkörpergewichtszusammensetzung (ohne Pastenharz) aus Beispiel | | | PBV¹⁾ | Krater (Anzahl/dm²) |
|---|---|---|---|---|---|
| | 2 | 3 | 5 | | |
| 6a (Vgl.) | 100 % | - | - | 0,5 : 1 | 3 |
| 6b (Vgl.) | - | 100 % | - | 0,5 : 1 | 2 |
| 6c (Vgl.) | 100 % | - | - | 0,2 : 1 | 9 |
| 6d (Vgl.) | - | 100 % | - | 0,2 : 1 | 7 |
| 6e (erf.) | 95 % | - | 5 % | 0,2 : 1 | 4 |
| 6f (erf.) | 90 % | - | 10 % | 0,2 : 1 | 2 |
| 6g (erf.) | - | 95 % | 5 % | 0,2 : 1 | 3 |
| 6h (erf.) | - | 90 % | 10 % | 0,2 : 1 | 1 |

| | | | | | |
|---|---|---|---|---|---|
| ¹⁾ Pigment/Bindemittel-Gewichtsverhältnis Vgl. = Vergleichsversuch, erf. = erfindungsgemäß | | | | | |

## Patentansprüche

1. Wäßrig dispergierte Bindemittel (A), erhältlich durch Neutralisation tertiärer Aminogruppen eines Aminoepoxidharzes a1) mit Säure und Umsetzung des erhaltenen Produkts mit einem aromatischen Epoxidharz a2) unter Bildung quartärer Ammoniumgruppen und Überführung mit Wasser in eine wäßrige Dispersion.

2. Wäßrig dispergierbare Bindemittel (A) gemäß Anspruch 1, **dadurch gekennzeichnet, daß** der Aminogruppengehalt des Aminoepoxidharzes a1) 35 bis 360 mEqu pro 100 g Festharz beträgt.

3. Wäßrig dispergierbare Bindemittel (A) gemäß einem der Ansprüche 1 oder 2, **dadurch gekennzeichnet, daß** die tertiären Aminogruppen des Aminoepoxidharzes a1) zumindest teilweise mit Säure neutralisiert sind.

4. Wäßrig dispergierbare Bindemittel (A) gemäß einem der Ansprüche 1, 2 oder 3, **dadurch gekennzeichnet, daß** das aromatische Epoxidharz a2) aus der Umsetzung von Polyphenolen mit Epichlorhydrin stammt.

5. Verfahren zur Herstellung wäßrig dispergierter Bindemittel (A), **dadurch gekennzeichnet, daß** diese durch Neutralisation tertiärer Aminogruppen eines Aminoepoxidharzes a1) mit Säure und Umsetzung, des erhaltenen Produkts mit einem aromatischen Epoxidharz a2) unter Bildung quartärer Ammoniumgruppen und Überführung mit Wasser in eine wäßrige Dispersion hergestellt werden.

6. Verfahren gemäß Anspruch 5, **dadurch gekennzeichnet, daß** ein Aminoepoxidharz a1) verwendet wird, dessen Aminogruppengehalt 35 bis 360 Equ pro 100 g Festharz beträgt.

7. Verfahren gemäß einemm der Ansprüche 5 oder 6, **dadurch gekennzeichnet, daß** ein Aminoepoxidharz a1) verwendet wird, dessen tertiäre Aminogruppen zumindest teilweise neutralisiert sind.

8. Verfahren gemäß einem der Ansprüche 5, 6 oder 7, **dadurch gekennzeichnet, daß** ein aromatisches Epoxidharz a2) verwendet wird, das aus der Umsetzung von Polyphenolen mit Epichlorhydrin stammt.

9. Kathodisch abscheidbare Elektrotauchlacke, **dadurch gekennzeichnet, daß** ihr Bindemittelfestkörper zu 1 - 50 Gew.-% aus einem oder mehreren Bindemitteln (A) gemäß einem der Ansprüche 1 bis 4 und zu 99 bis 50 Gew.-% aus einem oder mehreren selbst- oder fremdvernetzenden kathodisch abscheidbaren Bindemitteln (B) besteht, wobei die Summe der Gewichtsprozentanteile der Komponenten (A) und (B) 100 Gew.-% beträgt und wobei gegebenenfalls ein Vernetzer (C) in einem Verhältnis von 10 bis 40 Gewichtsteilen auf 100 Gewichtsteile der Summme der Komponenten (A) und (B) zugesetzt ist.

## Claims

1. Aqueously dispersed binders A) obtainable by neutralising tertiary amino groups of an aminoepoxy resin a1) with acid and reacting the resultant product with an aromatic epoxy resin a2) to form quaternary ammonium groups and converting the result into an aqueous dispersion with water.

2. Aqueously dispersible binders (A) according to claim 1, **characterised in that** the amino group content of the aminoepoxy resin a1) is 35 to 360 meq per 100 g of solid resin.

3. Aqueously dispersible binders (A) according to one of claims 1 or 2, **characterised in that** the tertiary amino groups of the aminoepoxy resin a1) are at least partially neutralised with acid.

4. Aqueously dispersible binders (A) according to one of claims 1, 2 or 3, **characterised in that** the aromatic epoxy resin a2) is obtained from the reaction of polyphenols with epichlorohydrin.

5. A process for the production of an aqueously dispersed binders (A), **characterised in that** the latter are produced by neutralising tertiary amino groups of an aminoepoxy resin a1) with acid and reacting the resultant product with an aromatic epoxy resin a2) to form quaternary ammonium groups and converting the result into an aqueous dispersion with water.

6. A process according to claim 5, **characterised in that** an aminoepoxy resin a1) is used, the amino end group content of which is 35 to 360 eq per 100 g of solid resin.

7. A process according to one of claims 5 or 6, **characterised in that** an aminoepoxy resin a1) is used, the tertiary amino groups of which are at least partially neutralised.

8. A process according to one of claims 5, 6 or 7, **characterised in that** an aromatic epoxy resin a2) is used which originates from the reaction of polyphenols with epichlorohydrin.

9. Cathodically depositable electrocoating lacquers, **characterised in that** the binder solids content thereof consists of 1-50 wt.% of one or more binders (A) according to one of claims 1 to 4 and 99-50 wt.% of one or more intrinsically or extrinsically crosslinking cathodically depositable binders (B), wherein the sum of weight percentages of components (A) and (B) is 100 wt.% and wherein a crosslinking agent (C) is optionally added in a ratio of 10 to 40 parts by weight per 100 parts by weight of the sum of components (A) and (B).

## Revendications

1. Dispersion aqueuse de liants (A) obtenue par neutralisation à l'acide de groupements amine tertiaire d'une résine amino-époxyde a1) et réaction du produit obtenu avec une résine époxyde aromatique a2) avec formation de groupements ammonium quaternaire et transformation avec de l'eau en une dispersion aqueuse.

2. Liant pouvant donner une dispersion aqueuse (A) selon la revendication 1, **caractérisé en ce que** la teneur en groupements amine de la résine amino-époxyde a1) est de 35 à 360 milliéquivalents par 100 g de résine solide.

3. Liant pouvant donner une dispersion aqueuse (A) selon Tune des revendications 1 ou 2, **caractérisé en ce que** les groupements amine tertiaire de la résine amino-époxyde a1) sont au moins partiellement neutralisés avec de l'acide.

4. Liant pouvant donner une dispersion aqueuse (A) selon l'une des revendications 1, 2 ou 3, **caractérisé en ce que** la résine époxyde aromatique a2) est issue de la réaction de polyphénols avec l'épichlorhydrine.

5. Procédé de fabrication de dispersions aqueuses de liants (A), **caractérisé en ce que** ces dernières sont fabriquées par neutralisation à l'acide des groupements amine tertiaire d'une résine amino-époxyde a1) et réaction du produit obtenu avec une résine époxyde aromatique a2) avec formation de groupements ammonium quaternaire et transformation avec de l'eau en une dispersion aqueuse.

6. Procédé selon la revendication 5, **caractérisé en ce qu'**une résine amino-époxyde a1) dont la teneur en groupement amine est de 35 à 360 équivalents par 100 g, est utilisée.

7. Procédé selon l'une des revendications 5 ou 6, **caractérisé en ce qu'**une résine amino-époxyde a1) dont les groupements amine tertiaire sont au moins partiellement neutralisés, est utilisée.

8. Procédé selon l'une des revendications 5, 6 ou 7, **caractérisé en ce qu'**une résine époxyde aromatique a2) issue de la réaction de polyphénols avec l'épichlorhydrine, est utilisée.

9. Peintures électrophorétiques pouvant être déposées par voie cathodique, **caractérisées en ce que** leur liant solide est constitué à 1-50% en poids d'un ou plusieurs liants (A) selon l'une des revendications 1 à 4 et à 99-50% en poids d'un ou plusieurs liants pouvant être déposés par voie cathodique, à réticulation intrinsèque ou externe (B), la somme des pourcentages en poids des composés (A) et (B) étant de 100% et un réticulant (C) étant éventuellement rajouté dans une proportion de 10 à 40% en poids de la somme des composés (A) et (B).
